Europäisches Patentamt

European Patent Office

Office européen des brevets

(11) Veröffentlichungsnummer: **0 224 233 B1**

(12) **EUROPÄISCHE PATENTSCHRIFT**

(45) Veröffentlichungstag der Patentschrift: 09.05.90

(21) Anmeldenummer: 86116262.6

(22) Anmeldetag: 24.11.86

(51) Int. Cl.⁵: **B 04 B 5/10, B 04 B 1/02**

54 **Gerät zum Abscheiden feiner Feststoffpartikel.**

(30) Priorität: 28.11.85 DE 3542133

(43) Veröffentlichungstag der Anmeldung:
03.06.87 Patentblatt 87/23

(45) Bekanntmachung des Hinweises auf die
Patenterteilung:
09.05.90 Patentblatt 90/19

(84) Benannte Vertragsstaaten:
AT BE CH DE FR GB IT LI SE

(56) Entgegenhaltungen:
EP-A-0 023 036
AU-B- 465 775
DE-U-8 533 545
FR-A-1 282 172
FR-A-2 463 748
US-A-3 623 657

(73) Patentinhaber: **Dürr-Dental GmbH & Co. KG**
**Postfach 305 Höpfigheimer Strasse 17**
**D-7120 Bietigheim-Bissingen (DE)**

(72) Erfinder: **Hofmann, Hans-Joachim**
**August-Lämmle-Strasse 26**
**D-7064 Remshalden 3 (DE)**
Erfinder: **Bollmann, Andreas**
**In den Linden 94**
**D-7121 Ingersheim 2 (DE)**
Erfinder: **Dürr, Walter**
**Bulachweg 14**
**D-7025 Leonberg 7 (DE)**

(74) Vertreter: **Ostertag, Reinhard et al**
**Patentanwälte Dr. Ulrich Ostertag Dr. Reinhard**
**Ostertag Eibenweg 10**
**D-7000 Stuttgart 70 (DE)**

Courier Press, Leamington Spa, England.

**Beschreibung**

Die Erfindung betrifft ein Gerät zum Abscheiden feiner Feststoffpartikel, insbesondere Amalgampartikel, aus Abwasser gemäß dem Oberbegriff des Anspruches 1.

Ein derartiges Gerät ist in der FR-A-2 463 748 beschrieben. Es enthält eine Saugpumpe, welche Amalgampartikel und Schaum enthaltendes Abwasser, wie es in der Praxis von Zahnärzten anfällt, zunächst durch einen Separator hindurchbewegt, in welchem Luft und Schaum möglichst vollständig abgetrennt werden. Das die Amalgampartikel enthaltende Abwasser wird anschließend der Zentrifuge zugeführt, in welcher die Amalgampartikel durch Zentrifugalkraft abgeschieden werden. Die abgeschiedenen Amalgampartikel werden in Form eines partikelreichen Schlammes in einem Sammelbehälter zur späteren ordnungsgemäßen Beseitigung gesammelt.

Bei diesem bekannten Gerät ist nachteilig, daß es mechanisch aufwendig ist, da sowohl für die Sauopumpe als auch für die Zentrifugentrommel ein Antriebsmotor benötiot wird. Auch erfordert das bekannte Gerät einen erhöhten Installationsaufwand.

In der FR-A-1 282 172 ist eine mehrstufie Zentrifuge beschrieben, die dazu dient, Gase mit sehr nahe beieinander lieoenden Molekulargewichten voneinander zu trennen. Zur Erhöhung der Tangentialgeschwindigkeit der zugeführten Gasströme ist die Innenfläche der Trommelumfangswand mit nach innen vorstehenden Flügeln besetzt. Bei einer mehrstufigen derartigen Zentrifuge ist auf einen die Zentrifugentrommel lagernden Hohlwellenstummel ein Verdichterlaufrad drehfest aufgesetzt, welches den Druckabfall zwischen einem mittleren Rückführpunkt und dem Einlaß der mehrstufigen Zentrifuge ausgleicht. Auf diese Weise kann man verworfene Gemischanteile, welche aber noch in wirtschaftlich interessantem Ausmaße die gewünschte Gasfraktion enthalten, nochmals zentrifugieren. Das Zuführen des Hauptstromes des zu zerlegenden Gasgemisches erfolgt jedoch unter Verwendung eines externen Gebläses.

Durch die vorliegende Erfindung soll ein Gerät zum Abscheiden feiner Feststoffpartikel aus Abwasser geschaffen werden, welches einfach zu installieren ist und nur einen einzigen Antriebsmotor aufweist.

Diese Aufgabe ist erfindungsgemäß gelöst durch ein Gerät gemäß Anspruch 1.

Durch die erfindungsgemäße Lösung ist zugleich gewährleistet, daß die Absaugpumpe nicht bei stehender Zentrifuge in Betrieb genommen werden kann, was dazu führen könnte, daß ungereinigtes Abwasser durch die stillstehende Zentrifugentrommel hinweg in die öffentliche Kanalisation gedrüc kt wird.

Vorteilhafte Weiterbildungen der Erfindung sind in Unteransprüchen angegeben.

Ein Gerät gemäß Anspruch 2 enthält keine internen Schlauchverbindungen und ist besonders einfach zu installieren. Durch das axiale Hintereinanderstellen von Wasserringpumpe und Zentrifuge ist es auch möglich, die Flüssigkeitsströme zwischen Einlaß und Auslaß des Gerätes durch Gehäusekanäle zu führen. Man erhält so insgesamt ein preisgünstiges, kompaktes und störunanfälliges Gerät zum Abscheiden feiner Feststoffpartikel, welches sich gut zur nachträglichen Installation unter räumlich beengten Verhältnissen, wie sie in Zahnarztpraxen aufgrund der dort schon vorhandenen vielfältigen Einrichtungen angetroffen werden, eignet.

Da die erfindungsgemäß im Abscheidegerät integrierte Saugpumpe eine Wasserringpumpe ist, kann dieser ein Luftund Schaumseparator nachgeschaltet werden, wie im Anspruch 3 angegeben, während bei Verwendung einer üblichen Saugpumpe ein solcher Separator der Saugpumpe vorgeschaltet werden muß. Dies ermöglicht es, einen entsprechenden Separator räumlich zwischen die Wasserringpumpe und die Zentrifuge zu setzen, so daß man die Luftund Schaum-Abscheidung ohne Vergrößerung der radialen Geräteabmessungen und bei nur geringfügiger Erhöhung der axialen Geräteabmessung erhält.

Mit der Weiterbildung der Erfindung gemäß Anspruch 6 wird erreicht, daß sämtliche Anschlüsse an das Gerät von einer Seite her erfolgen können. Auch dies ist im Hinblick auf eine kompakte Gesamtanordnung und ein einfaches Montieren der Verbindungen von Vorteil.

Die Weiterbildung der Erfindung gemäß Anspruch 7 ist im Hinblick auf gute Abtrennung von Luft und Schaum im Gehäusezwischenteil von Vorteil. Gleiches gilt für die Weiterbildung der Erfindung gemäß Anspruch 9.

An der Weiterbildung der Erfindung gemäß Anspruch 13 ist vorteilhaft, daß das gesamte Gerät niedrig baut. Außerdem hat die Welle des Antriebsmotors nur einen verhältnismäßig kurzen fliegend gelagerten Abschnitt. Schließlich läßt sich bei dem Gerät nach Anspruch 13 über die Kraftübertragung die Zentrifugendrehzahl auf einfache Weise unterschiedlich von der Drehzahl der Wasserringpumpe wählen.

Die Weiterbildung der Erfindung gemäß Anspruch 14 ist im Hinblick auf geringe Geräuschentwicklung, die Weiterbildung gemäß Anspruch 15 im Hinblick auf ein einfaches Überführen des zu reinigenden Wassers von der Absaugpumpe zur Zentrifuge von Vorteil.

Nachstehend wird die Erfindung anhand von Ausführungsbeispielen unter Bezugnahme auf die Zeichnung näher erläutert. In dieser zeigen:

Figur 1: Einen axialen Schnitt durch ein Gerät zum Abscheiden feiner Amalgampartikel aus dem in einer Zahnarztpraxis anfallenden Abwasser; und

Figur 2: Eine seitliche Ansicht eines abgewandelten Amalgamabscheidegerätes.

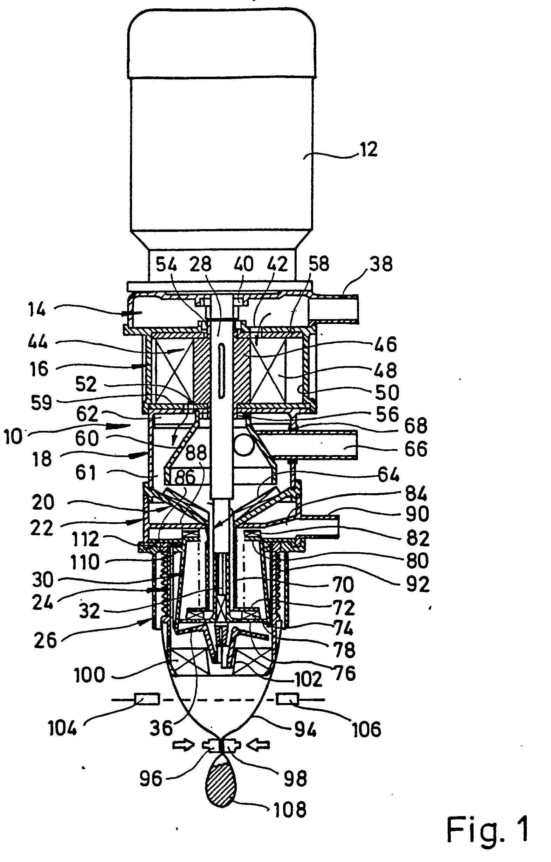

Das in Figur 1 wiedergegebene Abscheidegerät für Amalgampartikel hat ein insgesamt mit 10 bezeichnetes Gehäuse, welches einen elektrischen Antriebsmotor 12 trägt.

In der Zeichnung von oben nach unten besteht das Gehäuse 10 aus einem becherförmigen, nach unten offenen Gehäusekopfteil 14, einen Pumpengehäuseteil 16 einem ebenfalls becherförmigen, nach unten offenen Separatorgehäuseteil 18, einem kegelförmigen Separatorbodenteil 20, einem becherförmigen, nach oben offenen Zentrifugengehäusekopfteil 22, einem zylindrischen Zentrifugengehäusehauptteil 24 sowie einem letzteres koaxial umgebenden Schutzgehäuseteil 26.

Wie aus der Zeichnung ersichtlch, haben die verschiedenen Gehäuseteile an ihren Stoßstellen formschlüssig ineinanderpassende Endabschnitte. Bei den verschiedenen Gehäuseteilen handelt es sich um aus Kunststoff gespritzte Teile, welche miteinander verklebt oder verschweißt sind.

Die Motorwelle 28 des Antriebsmotors 12 erstreckt sich durch die verschiedenen Gehäuseteile hindurch und trägt an ihrem freien Ende eine insgesamt mit 30 bezeichnete Zentrifugentrommel. Im Inneren der Motorwelle 28 verläuft eine Stellwelle 32, auf deren Ende ein Zentrifugentrommelboden 36 befestigt ist. Letzterer ist zwischen einer das untere Trommelende verschließenden Stellung (links der Geräteachse wiedergegeben) und einer das untere Trommelende freigebenden Stellung (rechts der Geräteachse gezeigt) verstellbar, um intermittierend Amalgamschlamm, welcher sich an der Umfangswand der Zentrifugentrommel 30 ansammelt, abfließen zu lassen.

Das Zuführen des in einer Zahnarztpraxis anfallenden, Amalgampartikel, Zahnmaterial, Zahnzement, Blut und Speichel enthaltenden Flüssigkeitsstromes erfolgt über einen Einlaßstutzen 38, welcher von der Umfangswand des becherförmigen Gehäusekopfteiles 14 getragen ist. Am Boden des Gehäusekopfteiles 14 ist eine Gleitdichtung 40 vorgesehen, welche die Motorwelle 28 an der Eintrittsstelle in das Gehäuse 10 abdichtet.

Über eine radial innenliegende Einlaßöffnung 42, die im Boden des Pumpengehäuseteiles 16 vorgesehen ist, kann das zugeführte Abwasser in das Innere des Pumpengehäuseteiles 16 gelangen, in welchem ein von der Motorwelle 28 getragenes Pumpenlaufrad 44 umläuft. Letzteres hat einen drehfest mit der Motorwelle 28 verbundenen Nabenabschnitt 46 sowie eine Vielzahl radial vom letzteren vorstehender Flügel 48. Wie aus der Zeichnung ersichtlich, verläuft die Achse der zylindrischen Innenfläche 5D des Pumpengehäuseteiles 16 parallel zur Achse der Motorwelle 28, ist jedoch zur letzteren in seitlicher Richtung versetzt, in der Zeichnung nach rechts. Das Pumpenlaufrad 44 und das Pumpengehäuseteil 16 bilden somit zusammen eine Wasserringpumpe, aus welcher das Abwasser durch eine im Boden des Separatorgehäuseteiles 18 vorgesehene Öffnung 52 in das Innere des Separatorgehäuseteiles 18 übertreten kann. Die Öffnung 52 liegt der Einlaßöffnung 42 bezüglich der Achse der Motorwelle 28 diametral gegenüber und ist ebenso wie diese dem Nabenabschnitt 46 des Pumpenlaufrades 44 benachbart.

In der Zeichnung sind Lager für die radialen Enden des Pumpenlaufrades 44 mit 54 und 56 bezeichnet. In das Pumpengehäuseteil 16 sind zu beiden Seiten des Pumpenlaufrades 44 liegend zwei Stirnplatten 58, 59 drehfest eingesetzt, welche eine mit der Einlaßöffnung 42 fluchtende bzw. eine mit der Öffnung 52 fluchtende Öffnung aufweisen.

Am Boden des becherförmigen Separatorgehäuseteiles 18 hängt ein im wesentlichen kegelstumpfförmiges, glockenförmiges, nach unten offenes Separatorteil 60, welches zusammen mit der Umfangswand des Separatorgehäuseteiles 18 einen ringförmigen Durchgang 61 für den ankommenden, neben Feststoffpartikeln noch Luft und Schaum enthaltenden Flüssigkeitsstrom begrenzt. Zur Führung dieses Flüssigkeitsstromes ist in der Nachbarschaft der Öffnung 52 ein im wesentlichen in radialer Richtung verlaufendes Leitelement 62 vorgesehen, welches vom Boden des Separatorgehäuseteiles 18 herabhängt. Auf der Oberseite des kegelig abfallenden Separatorbodenteiles 20 sind in Umfangsrichtung verteilt mehrere radiale Leitelemente 64 angeordnet, welche die Drehbewegung des Flüssigkeitsstromes um die Zentrifugenachse brechen.

Die aus dem Flüssigkeitsstrom abgeschiedenen Luftanteile werden im Inneren des glockenförmigen Separatorteiles 60 aufgefangen und gelangen von dort in ein Luftabführrohr 66, welches unter Zwischenschaltung einer Dichtung 68 durch die Umfangswand des Separatorgehäuseteiles 18 hindurchgeführt ist.

Mit dem Separatorbodenteil 20 ist ein Einleitrohr 70 verbunden, welches vertikal nach unten bis in die Nähe eines Leitflansches 72 reicht, der über Pumpenflügel 74 und einen Laufradflansch 76 mit der Motorwelle verbunden ist. Der Laufradflansch 76 trägt über eine Vielzahl in Umfangsrichtung verteilter Tragstege 78 die sich in der Zeichnung nach unten leicht kegelig erweiternde Zentrifugentrommel 30.

Die Zentrifugentrommel 30 hat an ihrem oberen Ende einen radial nach innen verlaufenden Stirnflansch 80, der auf seiner Oberseite mit weiteren in Umfangsrichtung verteilten Pumpenflügeln 82 versehen ist.

Im Betrieb wird durch die Pumpenflügel 74 das aus dem Separatorgehäuseteil 18 über das Einleitrohr 70 zugeführte Partikel enthaltende Wasser rasch gegen die Umfangswand der Zentrifugentrommel 30 bewegt. Dort werden die Feststoffpartikel durch Zentrifugalkraft festgehalten, während das von ihnen befreite Wasser um den Stirnflansch 80 herum in einen ringförmigen Auslaßraum 84 strömt. Letzterer ist durch ein Bodenteil 86 des Zentrifugengehäusekopfteiles 22 begrenzt und steht mit einem Auslaßstutzen 90 in Verbindung, über den das von Feststoffpartikeln befreite Abwasser in die öffentliche Kanalisation abgegeben wird.

Wie aus der Zeichnung ersichtlich, liegen der Einlaßstutzen 38, das Luftabführrohr 66 und der Auslaßstutzen 90 in der gleichen axialen Ebene, so daß die Herstellung sämtlicher Anschlußverbindungen von einer Seite des Gerätes her erfolgen kann. Da der Stirnflansch 80 mit Pumpenflügeln 82 besetzt ist, kann das gereinigte Abwasser auch zu einer höher gelegenen Anschlußstelle des Abwassernetzes gefördert werden.

Wie aus der Zeichnung ersichtlich, umgibt das Zentrifugengehäusehauptteil 24 die Zentrifugentrommel 30 unter geringem Abstand und auf die Außenseite des Zentrifugengehäusehauptteiles ist ein gefalteter Vorrat 92 eines zu Beuteln schweißbaren Schlauches 94 aufgeschoben.

Unterhalb des Gehäuses 10 liegend ist eine Vorrichtung zum Abschweißen des Schlauches 94 schematisch als aus zwei aufeinander zubewegbaren Schweißbalken 96, 98 bestehend wiedergegeben.

Wird der Zentrifugentrommelboden 36 durch die Stellwelle 32 in der Zeichnung nach unten bewegt, so gelangt bei Verringerung der Drehzahl der Motorwelle 28 oder bei Anhalten des Antriebsmotors 12 an Amalgampartikeln reicher Schlamm, welcher sich zuvor auf der Innenfläche der Zentrifugentrommel 30 angesammelt hatte, in das Innere des am unteren Ende zugeschweißten Schlauches 94, welcher durch das Zentrifugengehäusehauptteil 24 abgestützt ist. Vom unteren Ende des Zentrifugengehäusehauptteiles 24 radial nach innen vorstehende in Umfangsrichtung verteilte Beruhigungsflügel 100 unterstützen das Absetzen der Amalgampartikel im Inneren des durch den abgeschweißten Schlauch 94 gebildeten Abfall-Sammelbehälters.

Wird nach dem Ablassen einer Schlammcharge der Zentrifugentrommelboden 36 wieder gegen das untere Ende der Zentrifugentrommel 30 bewegt, so saugt ein mittiger, kegelförmiger Rohrabschnitt 102 des Zenrifugentrommelbodens 36 überstehendes klares Wasser aus dem inneren des Schlauches 94 wieder in das Innere der Zentrifugentrommel 30 zurück, so daß die Menge des im Schlauch 94 enthaltenen Wassers über die Betriebszeit hinweg konstant bleibt, sich im Schlauch 94 aber zunehmend Amalgam ansammelt.

Hat sich im Inneren des Schlauches 94 eine vorgegebene Amalgammenge angesammelt, was z.B. durch eine Lichtschranke überwacht werden kann, die aus einer IR-Leuchtdiode 104 und einem IR-Detektor 106 besteht, so werden die Schweißbalken 96, 98 auseinandergefahren, der Schlauch 94 wird vom Zentrifugengehäusehauptteil 24 vertikal nach unten weggezogen, und das die Amalgampartikel enthaltende Schlauchende wird durch Zusammenfahren der Schweißbalken 96, 98 dicht verschlossen und vom Schlauch abgetrennt. Ein so erhaltener mit Amalgam gefüllter Beutel ist in der Zeichnung bei 108 gezeigt.

Der Vorrat 92 ist so bemessen, daß etwa 6 bis 10 derartige Beutel mit ihm hergestellt werden können.

Um eine Flüssigkeitsströmung längs der Außenfläche der Zentrifugentrommel 30 zum Auslaßraum 84 hin zu unterbinden, trägt die Zentrifugentrommel 30 am oberen Ende einen radialen Flansch 110, welcher mit rückfördernden Pumpenflügeln 112 besetzt ist.

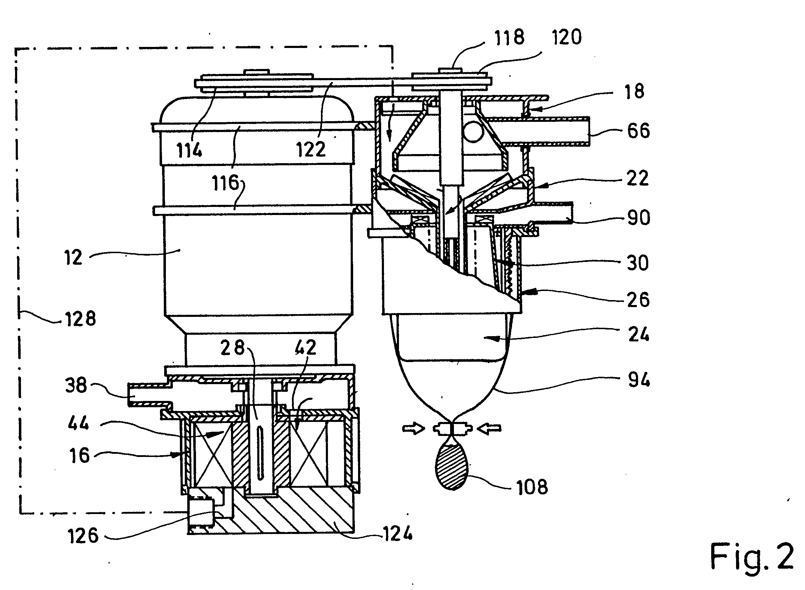

Bei dem in Figur 2 gezeigten Abscheidegerät sind Geräteteile, die obenstehend schon unter Bezugnahme auf Figur 1 erläuterten Geräteteilen entsprechen, wieder mit denselben Bezugszeichen versehen. Diese Teile brauchen nachstehend nicht im einzelnen noch einmal beschrieben zu werden.

Bei dem Abscheidegerät gemäß Figur 2 ist die durch die Bauelemente 14, 16 und 44 gebildete Wasserringpumpe auf den mit seinem Abtriebsende nun nach oben weisenden Antriebsmotor 12 aufgesetzt, und auf das nach oben geführte zweite Ende der Motorwelle 28 ist eine Riemenscheibe 114 aufgesetzt. Die in erster Linie aus den Bauteilen 18 bis 30 bestehende kombinierte Luftund Amalgam-Abscheideeinheit ist seitlich neben der durch den Antriebsmotor 12 und die Wasserringpumpe gebildeten Einheit angeordnet und mit dieser z.B. durch Verbindungsplatten 116 zu einer Einheit zusammengefaßt. Das obere Ende der aus der Abscheideeinheit herausgeführten Zentrifugenwelle 118 trägt eine weitere Riemenscheibe 120, die über einen Riemen 122 von der Riemenscheibe 114 her angetrieben wird. In der Praxis kann der Riemen 122 ein Zahnriemen sein, die beiden Riemenscheiben 114 und 120 Zahnriemenscheiben.

Wie aus Figur 2 ersichtlich, hat die Riemenscheibe 120 kleineren Durchmesser als die Riemenscheibe 114, und auf diese Weise wird erreicht, daß die Zentrifugentrommel 30 mit höherer Drehzahl umläuft als die Wasserringpumpe.

Das Überführen von Wasser vom Auslaß der Wasserringpumpe zu der Abscheideeinheit erfolgt über ein Bodenteil 124 der Wasserringpumpe, welches einen radialen Überführungskanal 126 aufweist, der über eine Leitung 128 zum Separatorgehäuseteil 18 führt.

Die Arbeitsweise des in Figur 2 gezeigten Gerätes ähnelt derjenigen des Gerätes nach Figur 1; wie aus Figur 2 ersichtlich, baut dieses Gerät jedoch besonders nieder, und die umlaufenden Wellen haben nur kurze fliegend gelagerte Abschnitte.

**Patentansprüche**

1. Gerät zum Abscheiden feiner Feststoffpartikel, insbesondere Amalgampartikeln aus Abwasser, mit einem Motor (121), mit einer durch die Motorwelle (28) um eine vertikale Achse angetriebenen Vollmantel-Zentrifugentrommel (30), mit einem mit dem Inneren der Zentrifugentrommen (30) in Verbindung setzbarn Sammelbehälter (94) für Partikelschlamm, mit einem die Trommel (30) umgebenden Gehäuse (10), in welchem ein Einlaßraum für verunreinigtes Wasser und ein Auslaßraum für gereinigtes Wasser ausgebildet sind, dadurch gekennzeichnet, daß die Motorwelle (28) ein Wasserringpumpenlaufrad (44) trägt, welches von einem Pumpengehäuseteil (16) umgeben ist, wobei die Achse der Innenwand (50) des Pumpengehäuseteiles (16) parallel zur Achse der Motorwelle (28) verläuft, jedoch seitlich zu dieser versetzt ist; daß der Einlaßraum (14) dem Pumpengehäuseteil (16) zugeordnet ist und mit dem Einlaß der durch letzteres und das Pumpenlaufrad (44) gebildeten Wasserringpumpe in Verbindung steht; und daß der Auslaß der Wasserringpumpe (16, 44) mit einem ins Innere der Zentrifugentrommel (30) bis im die Nähe des Zentrifugen bodens geführtes, coaxiales Einleitrohr (70) in Verbindung steht.

2. Gerät nach Anspruch 1, dadurch gekennzeichnet, daß der Auslaß der Wasserringpumpe (16, 44) über ein Gehäusezwischenteil (18) mit dem Einleitrohr (70) verbunden ist.

3. Gerät nach Anspruch 2, dadurch gekennzeichnet, daß die Einlaßöffnung (42) der Wasserringpumpe in einer Stirnwand des Pumpengehäuseteiles (16) vorgesehen ist und der Einlaßraum durch ein auf diese Stirnwand aufgesetztes becherförmiges Gehäusekopfteil (14) begrenzt ist, welches auf seiner Umfangswand einen Einlaßstutzen (38) trägt.

4. Gerät nach Anspruch 3, dadurch gekennzeichnet, daß die Auslaßöffnung (52) der Wasserringpumpe (16, 44) der Einlaßöffnung (42) bezüglich der Pumpenachse gegenüberliegend in der zweiten Stirnwand des Pumpengehäuseteiles (16) vorgesehen ist.

5. Gerät nach einem der Ansprüche 2 bis 4, dadurch gekennzeichnet, daß das Gehäusezwischenteil (18) ein dem Pumpengehäuseteil (16) benachbartes, zum Pumpengehäuseteil (16) hin geschlossenes, am anderen Ende offenes glockenförmiges Separatorteil (60) aufweist, dessen Innenraum mit einem Luftabführrohr (66) in Verbindung steht, welches durch die Umfangswand des Gehäusezwischenteiles (18) dicht (68) hindurchgeführt ist.

6. Gerät nach Anspruch 3 und 5, dadurch gekennzeichnet, daß der ringförmige Auslaßraum (84) durch ein Zentrifugengehäusekopfteil (22) begrenzt ist, welches in seiner Umfangswand mit einem Auslsßstutzen (82) versehen ist, welcher in derselben axialen Ebene des Gerätes liegt wie der Einlaßstutzen (38) und das Luftabführrohr (66).

7. Gerät nach Anspruch 5 oder 6, gekennzeichnet durch ein radiales Leitelement (62) zum Führen des in das Gehäusezwischenteil (18) eintretenden Flüssigkeitsstromes.

8. Gerät nach einem der Ansprüche 5 bis 7, wobei die Motorwelle (28) vertikal ausgerichtet ist, dadurch gekennzeichnet, daß der Boden (20) des Gehäusezwischenteiles (18) kegelförmig zu seiner Mitte hin abfällt.

9. Gerät nach einem der Ansprüche 5 bis 8, gekennzeichnet durch vom Boden (20) des Gehäusezwischenteiles (18) getragene radiale Leitelemente (64) zum Beruhigen des aus dem Gehäusezwischenteil (18) austretenden Flüssigkeitsstromes.

10. Gerät nach einem der Ansprüche 3 bis 9, dadurch gekennzeichnet, daß die Wasserringpumpe (16, 44) dem Antriebsmotor (12) benachbart und die Zentrifugentrommel (30) beim freien Ende der Motorwelle (28) angeordnet ist und daß das Gehäusekopfteil (14) eine Dichtung (40) für die Motorwelle (28) aufweist.

11. Gerät nach einem der Ansprüche 2 bis 10, dadurch gekennzeichnet, daß die verschiedenen Gehäuseteile (14—26) jeweils becherförmig sind und ihre zylindrische Umfangswände im wesentlichen den gleichen Radius aufweisen, wobei das freie Ende der Umfangswand eines der becherförmige Gehäuseteile jeweils dicht mit dem Boden eines benachbarten Gehäuseteiles verbunden ist.

12. Gerät nach Anspruch 11, dadurch gekennzeichnet, daß die Gehäuseteile aus Kunststoff gespritzt sind.

13. Gerät nach Anspruch 1, dadurch gekennzeichnet, daß die Zentrifugentrommel (30) seitlich neben dem Antriebsmotor (12) angeordnet ist und von der Motorwelle über eine Kraftübertragung (114, 120, 122) in Drehung versetzt wird.

14. Gerät nach Anspruch 13, dadurch gekennzeichnet, daß die Kraftübertragung (114, 120, 122) einen Riementrieb, vorzugsweise Zahnriementrieb umfaßt.

15. Gerät nach Anspruch 13 oder 14, dadurch gekennzeichnet, daß die Wasserringpumpe auf der Oberseite des Antriebsmotors angeordnet ist.

**Revendications**

1. Appareil pour la séparation de particules solides fines, en particulier des particules d'amalgames, contenues dans des eaux usées, comportant un moteur (12), un panier de centrifugeuse à paroi pleine (30) entraîné autour d'un axe vertical par l'arbre (28) du moteur (12), un vase collecteur (94) pour des particules de boue pouvant être mis en communication avec l'intérieur du panier de centrifugeuse (30), et une cage (10) entourant le panier (30) dans laquelle sont formées une chambre d'entrée d'eau contaminée et une chambre de sortie d'eau épurée, caractérisé en ce que l'arbre (28) du moteur (12) est équipé d'une roue à ailettes de pompe à anneau d'eau (44), laquelle est entourée par une cage de pompe (16), l'axe de la paroi intérieure (50) de la cage de pompe (16) étant parallèle à l'axe de l'arbre (28) du moteur (12), mais toutefois décalé latéralement par rapport à celui-ci; en ce que la chambre d'entrée (14) est prévue au-dessus de la cage de pompe (16) et communique avec l'entrée de la pompe à anneau d'eau formée par la cage (16) et la roue à ailettes (44); et en ce que la sortie de la pompe à anneau d'eau (16, 44) communique avec un tube de transfert (70) prévu coaxialement à l'intérieur du panier (30) et se prolongeant jusqu'à proximité du fond de la centrifugeuse.

2. Appareil suivant la revendication 1, caractérisé en ce que la sortie de la pompe à anneau d'eau (16, 44) est reliée au tube de transfert (70) au moyen d'une cage intermédiaire (18).

3. Appareil suivant la revendication 2, caractérisé en ce que l'orifice d'admission (42) de la pompe à anneau d'eau est prévu dans une paroi terminale de la cage de pompe (16) et en ce que la chambre d'entrée est délimitée par une coiffe (14) en forme de godet, laquelle est installée sur ladite paroi terminale et comporte un manchon d'entrée (38) sur sa paroi périphérique.

4. Appareil suivant la revendication 3, caractérisé en ce que l'orifice de sortie (52) de la pompe à anneau d'eau (16, 44) est prévu dans la deuxième paroi terminale de la cage de pompe (16), du côté diamétralement opposé à l'orifice d'admission (42), par rapport à l'axe de pompe.

5. Appareil suivant une des revendications 2 à 4, caractérisé en ce que la cage intermédiaire (18) présente, de façon contiguë à la cage de pompe (16), un élément séparateur (60) en forme de cloche fermée du côté de la cage de pompe (16) et ouverte de l'autre côté, dont la chambre intérieure communique avec un tube d'évacuation d'air (66) traversant de manière étanche (68) la paroi périphérique de la cage intermédiaire (18).

6. Appareil suivant les revendications 3 et 5, caractérisé en ce que la chambre de sortie annulaire (84) est délimitée par une coiffe (22) de cage de centrifugeuse pour vue d'un manchon de sortie (82) dans sa paroi périphérique, lequel se trouve dans le même plan axial de l'appareil que le manchon d'entrée (38) et que le tube d'évacuation d'air (66).

7. Appareil suivant la revendication 5 ou 6, caractérisé en ce qu'il comporte un élément-guide radial (62) destiné à guider l'écoulement du liquide pénétrant dans la cage intermédiaire (18).

8. Appareil suivant une des revendications 5 à 7 dont l'arbre (28) du moteur (12) est disposé verticalement, caractérisé en ce que le fond (20) de la cage intermédiaire (18) est incliné en direction de son milieu de manière conique.

9. Appareil suivant une des revendications 5 à 8, caractérisé en ce que des éléments-guides radiaux (64) destinés à stabiliser l'écoulement du liquide sortant de la cage intermédiaire (18), sont prévus sur le fond (20) de la cage intermédiaire (18).

10. Appareil suivant une des revendications 3 à 9, caractérisé en ce que la pompe à anneau d'eau (16, 44) est située à proximité du moteur de commande (12) et le panier de centrifugeuse (30) à l'extrémité libre de l'arbre (28) du moteur (12) et en ce que la coiffe (14) pré sente une bague d'étanchéité (40) destinée à l'arbre (28) du moteur (12).

11. Appareil suivant une des revendications 2 à 10, caractérisé en ce que les différentes cages (14—26) sont chaque fois en forme de godet et en ce que leurs parois périphériques cylindriques présentent substantiellement le même rayon, l'extrémité libre de la paroi périphérique de chacune des cages étant reliée de façon étanche avec le fond de la cage voisine.

12. Appareil suivant la revendication 11, caractérisé en ce que les différentes cages sont en matière synthétique coulée par injection.

13. Appareil suivant la revendication 1, caractérisé en ce que le panier de centrifugeuse (30) se trouve disposé latéralement à côté du moteur de commande (12) et est mis en rotation par l'arbre du moteur au moyen d'un mécanisme de transmission (114, 120, 122).

14. Appareil suivant la revendication 13, caractérisé en ce que le mécanisme de transmission (114, 120, 122) comporte une courroie d'entraînement, de préférence une courroie dentée.

15. Appareil suivant la revendication 13 ou 14, caractérisé en ce que la pompe à anneau d'eau se trouve disposée du côté supérieur du moteur de commande.

**Claims**

1. A device for separating fine particles of solid matter, particularly amalgam particles, from waste fluid, having a motor (12), a solid bowl centrifuge drum (30) driven by the motor shaft (28) to rotate about a vertical axis, a collecting vessel (94) for particle sludge which can be connected to the interior of the centrifuge drum (30), and a casing (10) enclosing the drum (30) and incorporating an inflow compartment for contaminated water and an outflow compartment for purified water, characterized in that the motor shaft (28) supports a water ring pump impeller (44) enclosed by a pump casing element (16), the axis of the inner wall (50) of the pump casing element (16) running parallel to the axis of the motor shaft (28) but laterally offset relative thereto; that the inflow compartment (14) adjoins the pump casing element (16) and is connected to the intake of the water ring pump formed by the pump casing element (16) and the pump impeller (44); and that the outlet of the water ring pump (16, 44) is connected to a coaxial induction pipe (70) which projects into the interior of the centrifuge drum (30) extending close to the bottom of the centrifuge drum.

2. The device of Claim 1, characterized in that the outlet of the water ring pump (16, 44) is connected to the induction pipe (70) via an intermediate casing element (18).

3. The device of Claim 2, characterized in that the intake (42) of the water ring pump is provided in an end wall of the pump casing element (16) and the inflow compartment is delimited by a cup-shaped casing head element (14) positioned on said end wall, the casing head element supporting an inlet connection (38) on its peripheral wall.

4. The device of Claim 3, characterized in that the outlet opening (52) of the water ring pump (16, 44) is provided in the second end wall of the pump casing element (16) opposite the intake (42) relative to the axis of the pump.

5. The device of any of Claims 2 to 4, characterized in that the intermediate element of the casing (18) exhibits a bell-shaped separator element (60) which is adjacent the pump casing element (16), closed toward the pump casing element (16) and open at the other end, and the interior of which is connected to an air discharge pipe (66) which is fed, tightly sealed, through the peripheral wall of the casing intermediate element (18).

6. The device of Claims 3 and 5, characterized in that the annular outflow compartment (84) is delimited by a centrifuge casing head element (22) whose peripheral wall is provided with an outflow connection (82) which lies in the same axial plane of the device as the inlet connection (38) and the air discharge pipe (66).

7. The device of Claims 5 or 6, characterized by a radial guide (62) for channeling the stream of fluid entering the casing intermediate element (18).

8. The device of any of Claims 5 to 7, wherein the motor shaft (28) is vertically aligned, characterized in that the base (20) of the casing intermediate element (18) conically decreases in size toward its center.

9. The device of any of Claims 5 to 8, characterized by radial guides (64) supported by the base (20) of the casing intermediate element (18) to smooth the stream of fluid leaving the casing intermediate element (18).

10. The device of any of Claims 3 to 9, characterized in that the water ring pump (16, 44) is disposed adjacent the drive motor (12) and the centrifuge drum (30) is arranged at the free end of the motor shaft (28) and that the casing head element (14) exhibits a seal (40) for the motor shaft (28).

11. The device of any of Claims 2 to 10, characterized in that each of the various casing elements (14—26) is cup-shaped and their cylindrical peripheral walls have essentially the same radius, the free end of the peripheral wall of one cup-shaped casing element in each case being hermetically connected to the base of a neighboring casing element.

12. The device of Claim 11, characterized in that the casing elements are extruded from plastic.

13. The device of Claim 1, characterized in that the centrifuge drum (30) is laterally disposed next to the drive motor (12) and set in rotational motion by the motor shaft via a power train (114, 120, 122).

14. The device of Claim 13, characterized in that the power train (114, 120, 122) comprises a belt drive, preferably a toothed belt drive.

15. The device of Claim 13 or 14, characterized in that the water ring pump is disposed on the top surface of the drive motor.

EP 0 224 233 B1

Fig. 1

Fig. 2